# EUROPEAN PATENT APPLICATION

(11) **EP 4 730 302 A2**
(43) Date of publication of application: **22.04.2026**
(21) Application number: 25208622.8
(22) Date of filing: 14.10.2025
(51) Int. Cl.: G08G 5/21, G01S 13/95, G08G 5/25, G08G 5/34, G08G 5/53, G08G 5/55, G08G 5/76

(54) **SYSTEM FOR WEATHER AVOIDANCE BY OWNSHIP VEHICLE**

(30) Priority: 15.10.2024 IN 202411078130; 24.01.2025 US 202519036912
(71) Applicant: Honeywell International Inc., Charlotte, NC 28202 (US)
(72) Inventor: MARIAPPAN, Karthikeyan, Charlotte, 28202 (US); BALADHANDAPANI, Gobinathan, Charlotte, 28202 (US); GUNAMALAI, Senthil vel, Charlotte, 28202 (US)
(74) Representative: Haseltine Lake Kempner LLP

(57) **Abstract**

An aircraft avionics system of an ownship vehicle comprising: communications circuitry; a user interface (UI); and processing circuitry configured to: receive a first set of information indicating one or more first characteristics of weather formations along a planned route of the ownship vehicle; receive, via the communications circuitry, a second set of information from one or more other vehicles, wherein the second set of information indicate one or more second characteristics of the weather formations, the one or more second characteristics being different from the one or more first characteristics; determine, based on the one or more first characteristics of the weather formations, the one or more second characteristics of the weather formations, and one or more characteristics of the ownship vehicle, an alternate route; and present, via the UI, the alternate route to an operator of the ownship vehicle.

## Description

This application claims the benefit of Indian Provisional Patent Application No. 202411078130, filed October 15, 2024, and entitled "SYSTEM FOR WEATHER AVOIDANCE BY OWNSHIP VEHICLE," the entire contents of which is incorporated herein by reference.

### TECHNICAL FIELD

The disclosure relates to aircraft avionics and more specifically to aircraft systems that display information to aircraft operators.

### BACKGROUND

Aircraft, both manned and unmanned, may reroute planned flight paths based on changing conditions, such as predicted or actual weather conditions including turbulence, smoke, volcanic ash, and other conditions affecting flight.

### SUMMARY

In general, the disclosure describes systems, methods, and devices for receiving information affecting a flight path from several different sources, combining that information to determine properties of weather elements, and based on the properties of the weather elements and properties of the ownship vehicle, determine alternate routes for the ownship vehicle. Alternate routes may extend around some weather elements and/or through some weather elements, e.g., based on the characteristics of the ownship vehicle. Some examples of information sources may include an ownship weather radar system, automatic dependent surveillance-broadcast (ADS-B), flight information system broadcast (FIS-B), global position system (GPS), data from an ownship flight management computer (FMC), or other onboard or ground-based sensors and similar sources.

In some examples, sensor(s) onboard the ownship vehicle are insufficient to provide information needed to determine the properties of the weather elements. In such examples, the system may receive (e.g., from another vehicle traveling in the vicinity of the ownship vehicle) information (e.g., from sensor(s) of the other vehicle). The system may then combine the information from both the ownship vehicle and from the other vehicle to determine the properties of the weather elements. Examples of systems or devices that may receive, combine, and analyze the information may include processing circuitry that is part of an aircraft avionics system as well as a standalone device such as a tablet computer running an electronic flight bag (EFB) application. The processing circuitry may connect to a user interface, including a display, and may output a depiction of the recommended alternate routes and/or of the weather elements for use by an operator of the ownship vehicle.

In one example, this disclosure describes an aircraft avionics system of an ownship vehicle, the aircraft avionics system comprising: communications circuitry; a user interface (UI); and processing circuitry configured to: receive a first set of information indicating one or more first characteristics of a weather formation along a planned route of the ownship vehicle; receive, via the communications circuitry, a second set of information from one or more other vehicles, wherein the second set of information indicate one or more second characteristics of the weather formation, the one or more second characteristics being different from the one or more first characteristics; determine, based on the one or more first characteristics of the weather formation, the one or more second characteristics of the weather formation, and one or more characteristics of the ownship vehicle, an alternate route; and present, via the UI, the alternate route to an operator of the ownship vehicle.

In one example, this disclosure describes a method comprising: receiving, by processing circuitry of an ownship vehicle, a first set of information indicating one or more first characteristics of a weather formation along a planned route of the ownship vehicle; receiving, by the processing circuitry and via communications circuitry of the ownship vehicle, a second set of information from one or more other vehicles, wherein the second set of information indicates one or more second characteristics of the weather formation, the one or more second characteristics being different from the one or more first characteristics; determining, by the processing circuitry and based on the one or more first characteristics, the one or more second characteristics, and one or more characteristics of the ownship vehicle, an alternate route; and presenting, by the processing circuitry and via a user interface (UI) of the ownship vehicle, the alternate route to an operator of the ownship vehicle.

In one example, this disclosure describes a computer-readable medium comprising instructions that, when executed by processing circuitry of an ownship vehicle, causes the processing circuitry to: receive a first set of information indicating one or more first characteristics of a weather formation along a planned route of the ownship vehicle; receive, via communications circuitry of the ownship vehicle, a second set of information from one or more other vehicles indicating one or more second characteristics of the weather formation, the one or more second characteristics being different from the one or more first characteristics; determine, based on the one or more first characteristics, the one or more second characteristics, and one or more characteristics of the ownship vehicle, an alternate route; and present, via a user interface (UI) of the ownship vehicle, the alternate route to an operator of the ownship vehicle.

The details of one or more examples are set forth in the accompanying drawings and the description below. Other features, objects, and advantages will be apparent from the description, drawings, and claims.

### BRIEF DESCRIPTION OF DRAWINGS

FIG. 1 is a conceptual diagram illustrating an example operation of an ownship vehicle, in accordance with one or more techniques of this disclosure.
FIG. 2 is a block diagram illustrating an example system for an example ownship vehicle of FIG. 1.
FIG. 3 is a flow chart illustrating an example technique for determining alternate routes for the ownship vehicle of FIGS. 1-2.
FIG. 4 is a flow chart illustrating an example technique for obtaining additional information from another vehicle by an example system of the ownship vehicle of FIGS. 1-2.
FIG. 5 is a flow chart illustrating an example technique for determining alternate routes for the ownship vehicle based on the characteristics of weather formation(s) and of the ownship vehicle by an example system of ownship vehicle of FIGS. 1-2.

### DETAILED DESCRIPTION

The disclosure describes systems, methods, and devices for receiving information from one or more sources affecting a path of travel of an ownship vehicle. Processing circuitry may combine that information and based on analysis of the combined information along with characteristics of the ownship vehicle, present alternate routes for the ownship vehicle. Some examples of information sources may include an ownship weather radar system, automatic dependent surveillance-broadcast (ADS-B), flight information system broadcast (FIS-B), global position system (GPS), data from an ownship flight management computer (FMC), or other onboard sensors. In some examples, where information from the sensors on the ownship vehicle are insufficient to determine one or more characteristics of a weather formation in the path of travel of the ownship vehicle, the ownship vehicle may request and/or receive additional information on the weather formation from other vehicles. A computing system of the ownship vehicle may combine the additional information with the information obtained via the sensors of the ownship vehicle to determine the characteristics of the weather formation.

The ownship vehicle may determine alternate routes around and/or through weather formations based on the characteristics of the weather formation and on the characteristics of the ownship vehicle. Depending on the characteristics of the ownship vehicle, the ownship vehicle may be capable of traveling through certain types of weather formations. A computing system of the ownship vehicle may select alternate routes to avoid weather formations the ownship vehicle cannot travel through while reducing fuel expenditure of the maneuvers (e.g., by selecting alternate routes extending through weather formation(s) the ownship vehicle can travel through).

Examples of systems or devices that may perform the techniques described herein may include processing circuitry that is part of vehicle computing system (e.g., an aircraft avionics system) as well as processing circuitry of a computing system external to the ownship vehicle. The processing circuitry may receive the information via wired or wireless communication. The processing circuitry may also connect to a user interface, including a display, and in response to determining the ownship vehicle should adjust the planned path, may output a depiction of the recommended alternate route(s) for use by the operator of the ownship vehicle. While the ownship vehicle is primarily described herein as an aircraft, the ownship vehicle may include any other vehicle including, but is not limited to, an unmanned aerial vehicle (UAV), an automobile, a watercraft, or the like.

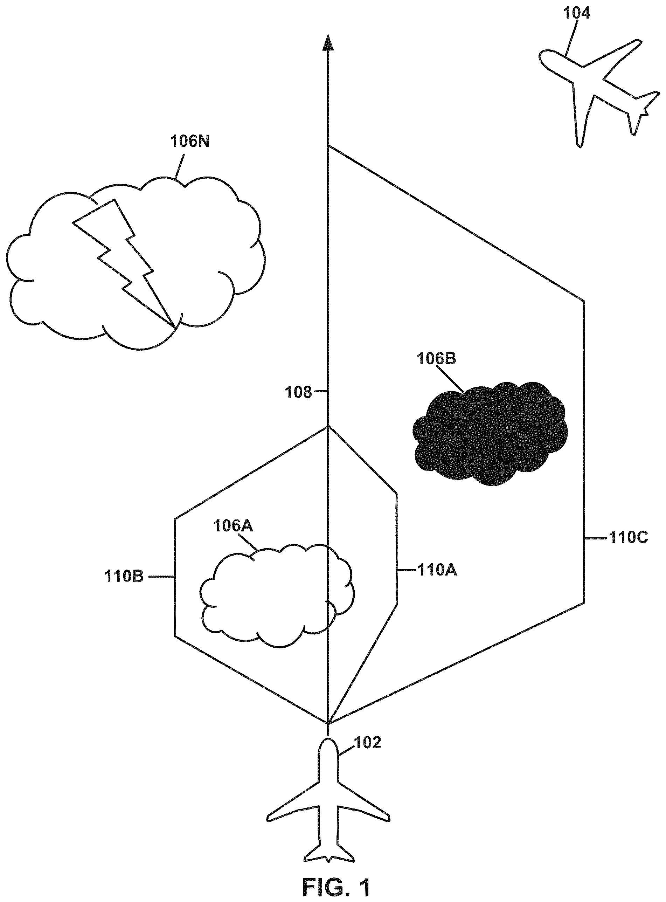

FIG. 1 is a conceptual diagram illustrating an example operation of an ownship vehicle 102, in accordance with one or more techniques of this disclosure. Ownship vehicle 102 may travel along a planned route 108 (alternatively referred to herein as "path of travel 108"). A display similar to the illustration of FIG. 1 may be outputted by a user interface (UI) of vehicle 102 to an operator of vehicle 102. The display may be outputted by, but is not limited to, a weather display of vehicle 102.

Along planned route 108, there may be weather formation(s) 106A-N (collectively referred to herein as "weather formations 106"). Each of weather formations 106 may be on or around planned route 108, e.g., less than or equal to a threshold distance from planned route 108. Weather formations 106 may each have different characteristics. Characteristics of weather formations 106 may include, but are not limited to, a position of weather formation 106 (e.g., relative to planned route 108, relative to ownship vehicle 102), a size of weather formation 106, a type of weather formation 106 (e.g., rain, turbulence, a storm cell, hail, windshear, weather reflectivity), a path of travel of weather formation 106, a travel speed of weather formation 106, or an altitude of weather formation 106. At least some of the characteristics of weather formations 106 may be outputted on the display. For example, weather formations 106 of different types may be denoted with different symbols or icons.

Ownship vehicle 102 may be capable of traveling through certain weather formations 106 and may be incapable of traveling though other weather formations 106. Characteristics of ownship vehicle 102 may affect whether ownship vehicle 102 may travel through a particular weather formation 106. Characteristics of ownship vehicle 102 may include, but are not limited to, a size of ownship vehicle 102, a wingspan of ownship vehicle 102, a type of ownship vehicle 102 (e.g., a classification, class, or type of an aircraft), a type of one or more engines of ownship vehicle 102, a presence of a specific system (e.g., an anti-icing system) in ownship vehicle 102, and/or an indication of one or more certifications of ownship vehicle 102 (e.g., certification(s) for specific weather conditions).

A computing system of ownship vehicle 102 (e.g., an aircraft avionics system of ownship vehicle 102) may detect the presence of and/or the characteristics of weather formations 106 based on information from ownship vehicle 102. The information from ownship vehicle 102 (alternatively described herein as the "first set of information") may be received from sensors of ownship vehicle 102. The sensors may be a part of a weather radar system, an ADS-B system, a FIS-B system, an ownship FMC, or the like. For each weather formation 106, the one or more characteristics determined based on information from ownship vehicle 102 may be alternatively referred to herein as "one or more first characteristics."

In some examples, the information may be insufficient to determine specific characteristics of weather formations 106 (e.g., a size of one or more of weather formations 106). In such examples, the computing system may request and/or receive information from other vehicles (e.g., from other vehicle 104). The computing system may constantly receive the information from other vehicle 104.

Other vehicle 104 may be within a threshold range from each of weather formations 106. The threshold range may be dependent on a size of ownship vehicle 102. For example, a threshold range for a larger ownship vehicle 102 may be less than a threshold range for a smaller ownship vehicle 102. The computing system of ownship vehicle 102 may only request information from and/or receive information from other vehicle 104 if other vehicle is within the threshold range of weather formations 106. The threshold range for other vehicle 104 may be based on sensing range(s) of sensor(s) on other vehicle 104. For example, threshold range for other vehicle 104 may be less than or equal to a maximum sensing range of sensor(s) on other vehicle 104 configured to detect characteristics of weather formations.

In some examples, the computing system transmits a request for information to other vehicle 104 based on a determination that the computing system has insufficient information to determine a threshold number of characteristics and/or one or more specific characteristics for one or more weather formations 106. The information received from other vehicle 104 may be alternatively referred to herein as a "second set of information." The information may be from the same or different types of sensors than sensors on ownship vehicle 102. Since other vehicle 104 is at a different position and orientation relative to weather formations 106, other vehicle 104 may provide information not obtainable by ownship vehicle 102. The computing system may combine the information obtained via sensors on ownship vehicle 102 with information received from other vehicle 104 to determine the characteristics of weather formations 106. For each weather formation 106, the one or more characteristics determined based on information received from other vehicle 104 may be alternatively referred to herein as "one or more second characteristics."

The computing system of ownship vehicle 102 may provide (e.g., via the UI of ownship vehicle 102) one or more alternate routes 110 A-C (collectively referred to herein as "alternate routes 110") for ownship vehicle 102. Each of alternate routes 110 may be a potential route for ownship vehicle 102 to avoid one or more weather formations 106. The computing system of ownship vehicle 102 may calculate, for each of alternate routes 110, maneuver(s) for ownship vehicle 102 to cause ownship vehicle 102 to travel along alternate route 110 and/or fuel expenditure needed to perform the maneuver(s).

The computing system may generate alternate routes 110 based on the characteristics of weather formations 106 and of ownship vehicle 102. Depending on the characteristics of ownship vehicle 102, ownship vehicle 102 may be able to pass through or near certain weather formations 106 (e.g., certain types of weather formations 106) with no risk of damage to ownship vehicle 102. The computing system may determine, based on the characteristics of weather formations 106 and of ownship vehicle 102, which weather formations 106 that ownship vehicle 102 may safely pass through or nearby. The computing system may then generate alternate routes 110 based on the determination. In such examples, one or more alternate routes 110 may cause ownship vehicle 102 to pass through one or more weather formations 106. By accounting for the characteristics of ownship vehicle 102 when generating alternate routes 110, the computing system may provide to the operator alternate routes 110 which may result in fewer maneuvers for ownship vehicle 102 and/or lower fuel expenditure for ownship vehicle 102, which may reduce unnecessary maneuvers and/or improve the fuel efficiency of ownship vehicle 102 in avoiding weather formations 106. The computing system may generate each alternate route 110 independent of a planned route or a direction of travel of other vehicle 104.

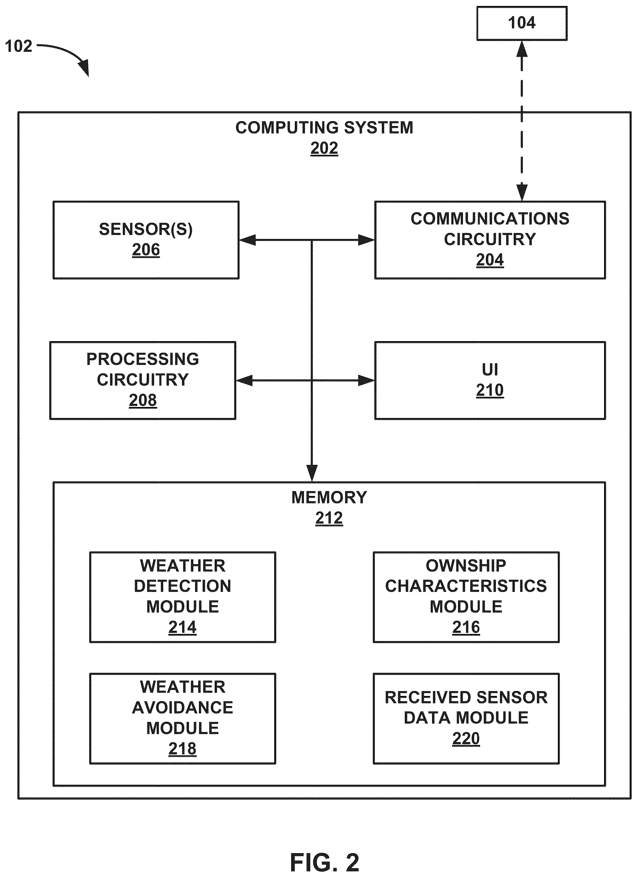

FIG. 2 is a block diagram illustrating an example computing system 202 for an example ownship vehicle 102 of FIG. 1. While computing system 202 is primarily described below as being disposed entirely within ownship vehicle 102, in some examples portions of computing system 202 may be disposed external to ownship vehicle 102, e.g., in an external computing system in communication with ownship vehicle 102.

Computing system 202 may include communications circuitry 204, sensor(s) 206, processing circuitry 208, user interface (UI) 210, and memory 212, Memory 212 may include a plurality of modules, each module being configured to store different information. The plurality of modules may include, but are not limited to, weather detection module 214, ownship characteristics module 216, weather avoidance module 218, and received sensor data module 220.

Examples of processing circuitry 208 may include any one or more of a microcontroller (MCU) (e.g., a computer on a single integrated circuit containing a processor core, memory, and programmable input/output peripherals), a microprocessor (µP) (e.g., a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry. Accordingly, the terms "processing circuitry," "processor," or "controller," as used herein, may refer to any one or more of the foregoing structures or any other structure operable to perform techniques described herein.

Communications circuitry 204 may facilitate communication between ownship vehicle 102 and other vehicle 104 and/or between ownship vehicle 102 and a ground-based controller. Communications circuitry 204 may establish a direct or an indirect communications link between ownship vehicle 102 and other vehicle 104. Communications circuitry 204 may transmit and receive information according one or more wireless communication protocols. The wireless communication protocols may include, but are not limited to, Controller Pilot Data Link Communications (CPDLC), Aircraft Communications Addressing and Reporting System (ACARS), or the like. Communications circuitry 204 may be coupled to one or more antennae (e.g., directional antennae, omnidirectional antennae) and may transmit and/or receive information via the one or more antennae.

Sensor(s) 206 may sense information external to ownship vehicle 102. Sensor(s) 206 may be a part of one or more systems of ownship vehicle 102 including, but are not limited to, a weather radar system, an ADS-B, a FIS-B, part of a GPS, part of an ownship FMC, or the like. Sensor(s) 206 may include, but are not limited to, radar sensors, lidar sensors, accelerometers, temperature sensors, pressure sensors, gyroscopes, or the like.

Memory 212 may store information sensed by or received by computing system 202. Memory 212 may include any type of non-transitory computer-readable storage media, such as random-access memory (RAM), read-only memory (ROM), programmable read-only memory (PROM), erasable programmable read-only memory (EPROM), one-time programmable (OTP) memory, electronically erasable programmable read-only memory (EEPROM), flash memory, or another type of volatile or non-volatile memory device. In some examples, the computer readable storage media of memory 212 may store instructions that cause processing circuitry 208 to execute the functions described herein. Memory 212 may include a plurality of modules including, but are not limited to, weather detection module 214, ownship characteristics module 216, weather avoidance module 218, and received sensor data module 220. The instructions for processing circuitry 208 may be stored within one or more modules of memory 212, e.g., within weather detection module 214, within weather avoidance module 218.

UI 210 may output information to an operator of ownship vehicle 102 and/or receive operator input from the operator. UI 210 may include one or more displays, switches, buttons, microphones, receivers, cameras, or the like. UI 210 may output the information to the operator in the form of visual, audio, or tactile signals. UI 210 may receive inputs from the operator in the form of visual, audio, or tactile input signals.

Processing circuitry 208 may retrieve and execute instructions stored in weather detection module 214 to determine the presence and/or characteristics of weather formations 106 based on sensed signals from sensor(s) 206. Processing circuitry 208 may receive sensed signals from sensor(s) 206 (e.g., sensor(s) 206 coupled to a weather radar system of ownship vehicle 102) indicative of weather conditions in front of ownship vehicle 102. In some examples, processing circuitry 208 may receive, e.g., via sensor(s) 206 and/or communications circuitry 204, information (e.g., from a GPS transmitter, from a ground-based controller, from a ground-based weather radar) indicative of weather conditions in front of ownship vehicle 102. Processing circuitry 208 may apply one or more algorithms or techniques to determine the characteristics of weather formations 106 (e.g., type, location, size, path of travel of each weather formation 106) based on the sensed signals and/or the received information.

In some examples, processing circuitry 208 determines that the first set of information is insufficient to satisfy a threshold condition for at least one weather formation 106 in front of ownship vehicle 102. For example, processing circuitry 208 may determine the presence of a blind spot in the first set of information. The threshold condition may correspond to a determination of at least a threshold number of characteristics for weather formation 106 and/or to a determination of one or more specific characteristics (e.g., type, size, position) for weather formation 106. In response to a determination that the threshold condition is not satisfied, processing circuitry 208 may request and/or receive, via communications circuitry 204, information from other vehicle 104. Processing circuitry 208 may cause communications circuitry 204 to transmit an active request for information to other vehicle 104 based on the determination that the threshold condition is not satisfied. In some examples processing circuitry 208 continuously or periodically passively receives information from other vehicle 104.

Computing system 202 may determine, for each weather formations 106, which characteristics need to be determined to satisfy the threshold condition. Computing system 202 may request, from other vehicle 104, specific sensed signals needed to determine the missing characteristics. The request for specific sensed signals may reduce an amount of information to be transmitted from other vehicle 104 to ownship vehicle 102 and may reduce the power and/or bandwidth required to transmit the second set of information from other vehicle 104 to ownship vehicle 102.

The second set of information may include sensed signals from sensor(s) of other vehicle 104 indicative of weather conditions around other vehicle 104. The sensed signals may correspond to weather formations 106 in front of ownship vehicle 102. With other vehicle 104 being at a different position and/or orientation relative to ownship vehicle 102, the sensed signals from other vehicle 104 may be different from the sensed signals from ownship vehicle 102, even if both sets of sensed signals were outputted by otherwise identical sensors disposed in other vehicle 104 and in ownship vehicle 102, respectively. Processing circuitry 208 may store the second set of information from other vehicle 104 in received sensor data module 220.

Based on a determination that the threshold condition is not satisfied, processing circuitry 208 may retrieve and combine the seconds set of information with the first set of information to determine additional characteristics for weather formations 106. Processing circuitry 208 may iteratively request and combine additional information from additional vehicles and/or sources outside of other vehicle 104 to determine and/or update characteristics for weather formations 106 until processing circuitry 208 determines that the threshold condition is satisfied for each of weather formations 106. Processing circuitry 208 may store the characteristics of weather formations 106 in memory 212.

Processing circuitry 208 may output, on a display of UI 210 (e.g., on a weather radar display of UI 210), the relative positions of weather formations 106 to ownship vehicle 102. In some examples, processing circuitry 208 indicates on the display, for each weather formation 106, one or more characteristics of weather formation 106 (e.g., altitude, type, size, direction of travel, distance to ownship vehicle 102).

Processing circuitry 208 may retrieve and execute instructions from weather avoidance module 218 of memory 212 to determine possible alternate routes 110 for ownship vehicle 102 in response to weather conditions 106. Processing circuitry 208 may determine alternate routes 110 based on the characteristics of weather formations 106 and characteristics of ownship vehicle 102 stored in ownship characteristics module 216 of memory 212.

Characteristics of ownship vehicle 102 may include, but are not limited to, size of ownship vehicle 102, wingspan of ownship vehicle 102, type of ownship vehicle 102, type of one or more engines of ownship vehicle 102, presence of a specific system in ownship vehicle 102, and/or indication of one or more certifications of ownship vehicle 102. Depending on the characteristics of ownship vehicle 102, ownship vehicle 102 may safely pass through certain weather formations 106. For example, ownship vehicle 102 with anti-icing systems may safely pass through weather formations 106 with icy conditions. In another example, ownship vehicle 102 with an increase size, wingspan, or more powerful engines may pass though weather formations 106 with moderate turbulence which may be inaccessible for other vehicles. Conversely, depending on the characteristics of ownship vehicle 102, ownship vehicle 102 may need to avoid certain weather formations 106. For example, ownship vehicle 102 without anti-icing systems may need to avoid weather formations 106 with icy conditions.

Processing circuitry 208 may determine a plurality of possible alternate routes 110 based on the characteristics of weather formations 106 and based on the characteristics of ownship vehicle 102. Processing circuitry 208 may filter through possible alternate routes 110 based on the number of maneuvers, magnitudes of each maneuver, and/or fuel expenditure for each alternate route 110. Based on the characteristics of ownship vehicle 102 and the characteristics of weather formations 106, processing circuitry 208 may determine which of weather formations 106 ownship vehicle 102 may pass through (alternatively referred to herein as "passable weather formations 106") and which of weather formations 106 ownship vehicle 102 should avoid (alternatively referred to herein as "impassable weather formations 106"). Processing circuitry 208 may select alternate routes 110 that extend through passable weather formations 106 and around impassable weather formations 106.

In some examples, processing circuitry 208 first generates the plurality of alternate routes 110 based on the characteristics of weather formations 106 and subsequently filters the plurality of alternate routes 110 down to a threshold number of alternate routes 110 based on the characteristics of ownship vehicle 102. In some examples, processing circuitry 208 generates up to or at least the threshold number of alternate routes 110 based on the characteristics of weather formations 106 and of ownship vehicle 102 simultaneously.

Processing circuitry 208 may output alternate routes 110 to the operator via UI 210. In some examples, processing circuitry 208 causes UI 210 to overlay routes 110 on top of a display of UI 210 showing the relative positions of ownship vehicle 102 and of weather formations 106. Processing circuitry 208 may cause UI 210 to present options to select each of alternate routes 110 to the operator. Based on selection by the operator received by UI 210, processing circuitry 208 may adjust planned route 108 to the selected alternate route 110. Processing circuitry 208 may transmit the selected alternate route 110 to a navigation system of ownship vehicle 102 (not picture in FIG. 2).

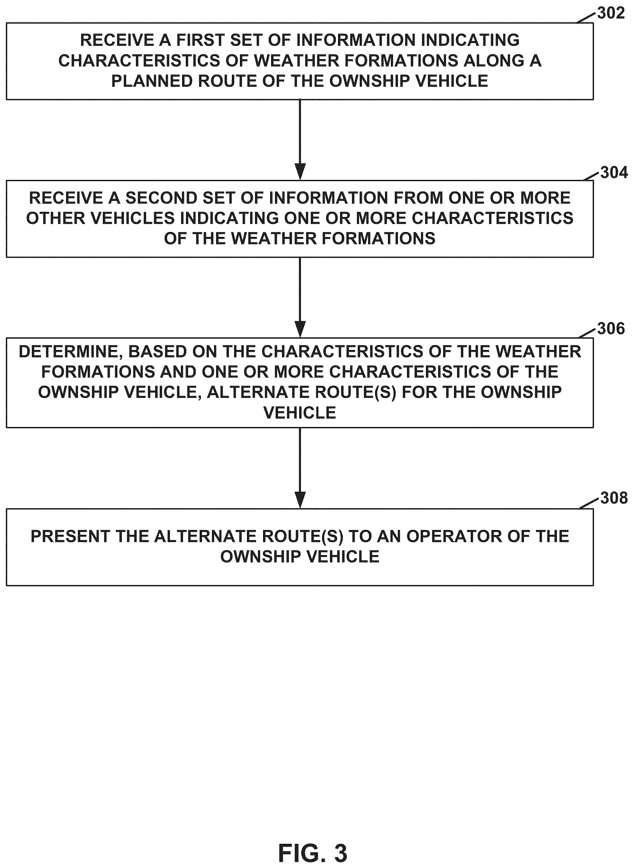

FIG. 3 is a flow chart illustrating an example technique for determining alternate routes 110 for ownship vehicle 102 of FIGS. 1-2. While the technique is described primarily with respect to ownship vehicle 102 illustrated in FIGS. 1-2, the technique may be performed by any other ownship vehicle described herein. While FIG. 3 illustrates steps of the techniques in one particular order, the steps of the techniques may be performed in other orders.

Computing system 202 of ownship vehicle 102 (e.g., processing circuitry 208 of computing system 202) may receive a first set of information indicating characteristics of weather formations 106 along planned route 108 of ownship vehicle 102 (302). The first set of information may include sensed signals from sensor(s) 206 of ownship vehicle 102. In some examples the first set of information include information received by ownship vehicle 102 from an external system (e.g., from a GPS, from a ground-based controller). Computing system 202 may receive the first set of information from sensor(s) 206, via communications circuitry 204, and/or via other receivers in ownship vehicle 102.

The sensed signals and/or received information may be indicative of weather conditions (e.g., of characteristics of weather formations 106) in front of and/or around ownship vehicle 102. Characteristics of weather formations 106 may include, but are not limited to, the position of weather formation 106, the size of weather formation 106, the type of weather formation 106, the path of travel of weather formation 106, the direction of travel of weather formation 106, the travel speed of weather formation 106, the distance of weather formation 106 to ownship vehicle 102, or an altitude of weather formation 106. Computing system 202 may determine one or more of the characteristics for each of weather formations 106 based on the sensed signals and/or received information.

Computing system 202 may receive a second set of information from one or more other vehicles 104 indicating one or more characteristics of weather formations 106 (304). In some examples, the sensed signals and/or received information within the first set of information may be insufficient for computing system 202 to determine the one or more of the characteristics of weather formations 106 (e.g., insufficient to satisfy threshold conditions for at least one of weather formations 106). Threshold conditions for weather formations 106 may include determination of at least a threshold number of characteristics or of particular characteristic(s) for weather formations 106.

In response to determining that the first set of information is insufficient to allow computing system 202 to satisfy the threshold conditions for weather formations 106, computing system 202 may request and/or receive for the second set of information from other vehicle 104. The second set of information may include sensed signals from other vehicle 104 corresponding to weather formations 106. The sensed signals may be obtained by other vehicle 104 from a location and/or orientation different from other vehicle 102 relative to weather formations 106. The sensed signals of the second set of information may be obtained via the same or different types of sensors as the sensed signals of the first set of information. In some examples, at least some of the sensed signals of the first and second set of information may overlap.

Computing system 202 may determine, based on the combination of the first and second sets of information, additional characteristics of weather formations 106 to satisfy threshold conditions of weather formations 106. In some examples, computing system 202 determines the additional characteristics of weather formations 106 based on at least a portion of the second set of information. When the threshold conditions of weather formations 106 are satisfied, computing system 202 may present an accurate indication of the presence, location, and characteristics (e.g., type, direction of travel, altitude) of weather formations 106 to an operator of ownship vehicle 102, e.g., via UI 210 of computing system 202.

Computing system 202 may determine, based on characteristics of weather formations 106 and one or more characteristics of ownship vehicle 102, alternate route(s) 110 for ownship vehicle 102 (306). Characteristics of ownship vehicle 102 may include size of ownship vehicle 102, wingspan of ownship vehicle 102, type of ownship vehicle 102, type of one or more engines of ownship vehicle 102, presence of a specific system in ownship vehicle 102, and/or an indication of one or more certifications of ownship vehicle 102. Depending on the characteristics, ownship vehicle 102 may pass through some weather formations 106 (i.e., passable weather formations 106) and not through other weather formations 106 (i.e., impassable weather formations 106).

Computing system 202 may determine which of weather formations 106 are passable weather formations 106 and which are impassable weather formations 106 based on the characteristics of weather formations 106 and of ownship vehicle 102. For example, computing system 202 may, for each weather formation 106, designate weather formation 106 as passable based on a determination that the characteristics of ownship vehicle 102 indicate that ownship vehicle 102 may safely pass through the weather formation type of weather formation 106. As another example, computing system 202 may, for each weather formation 106, designate weather formation 106 as impassable based on a determination that the characteristics of ownship vehicle 102 indicate that ownship vehicle 102 cannot safely pass through the weather formation type of weather formation 106.

Computing system 202 may determine alternate routes 110 for ownship vehicle 102 to avoid impassable weather formations 106 in front of ownship vehicle 102. In some examples, one or more of alternate routes 110 extends through one or more passable weather formations 106. Computing system 202 may narrow down a plurality of all possible alternate routes 110, e.g., based on a number of maneuvers, magnitudes of each maneuver, and/or fuel consumption for each alternate route 110. Computing system 202 may select, from the plurality of all possible alternate routes 110, alternate routes 110 with reduced numbers of maneuvers, with maneuvers with reduced magnitudes, and/or with reduced fuel consumption. Alternate routes 110 extending through passable weather formations 106 may require fewer maneuvers, fewer high magnitude maneuvers, and/or less fuel consumption than other alternate routes 110 extending around passable weather formations 106.

Computing system 202 may present (e.g., via UI 210 of computing system 202), alternate route(s) 110 to the operator of ownship vehicle 102 (308). Computing system 202 may overlay alternate route(s) 110 on top of a display indicating the positions of ownship vehicle 102 and weather formations 106 (e.g., a weather radar map). For each alternate route 110, computing system 202 may indicate one or more of maneuvers for alternate route 110, fuel consumption for alternate route 110, or weather formations 106 ownship vehicle 102 may pass through along alternate route 110. Computing system 202 may receive operator input via UI 210 indicating a selection by the operator of a specific alternate route 110 and may transmit instructions for the specific alternate route 110 to a navigation system of ownship vehicle 102.

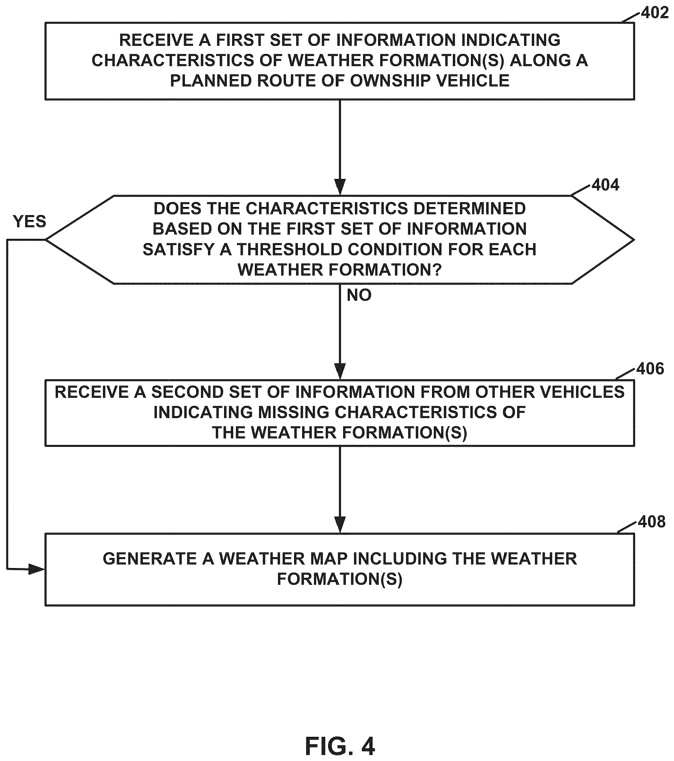

FIG. 4 is a flow chart illustrating an example technique for obtaining additional information from another vehicle by an example system of the ownship vehicle of FIGS. 1-2. While the technique illustrated in FIG. 4 is described primarily with respect to ownship vehicle 102 illustrated in FIGS. 1-2, the technique may be performed by any other ownship vehicle described herein. While FIG. 4 illustrates steps of the techniques in one particular order, the steps of the techniques may be performed in other orders.

Computing system 202 may receive a first set of information indicating characteristics of weather formation(s) 106 along a planned route 108 of ownship vehicle 102 (402). Computing system 202 may receive the first set of information in accordance with the example techniques previously described herein, e.g., with respect to FIG. 3. Computing system 202 may determine characteristics for weather formation(s) 106 based on the first set of information.

Computing system 202 may determine whether the characteristics determined based on the first set of information satisfy a threshold condition for each weather formation 106 (404). The threshold condition may include, but is not limited to, one or more of an indication that at least a threshold number of characteristics have been determined for the respective weather formation 106 or an indication that specific characteristic(s) for the respective weather formation 106 (e.g., type, size, position) have been determined.

Based on a determination that the determined characteristics satisfy the threshold condition for each weather formation 106 ("YES" branch of 404), computing system 202 may generate a weather map including weather formation(s) 106 (408). The weather map may indicate the positions of weather formation(s) 106 relative to ownship vehicle 102. Computing system 202 may output the weather map on a display of UI 210. In some examples, computing system 202 outputs, on the weather map, one or more determined characteristics for each weather formation 106. Computing system 202 may output the one or more determined characteristics outputted on the weather map may include, but are not limited to, type, size, altitude, or distance to ownship vehicle 102 for each weather formation 106.

Based on a determination that the determined characteristics do not satisfy the threshold condition for each weather formation 106 ("NO" branch of 404), computing system 202 may receive a second set of information from other vehicles 104 indicating missing characteristics of weather formation(s) 106 (406). Computing system 202 may receive the second set of information in accordance with one or more example techniques previously described herein. The missing characteristics may include, for each weather formation 106, characteristics computing system 202 needs to determine to satisfy the threshold condition for the respective weather formation 106. Computing system 202 may request, for the second set of information, the same or different types of sensed signals for each different weather formations 106.

Computing system 202 may, based on the second set of information, determine the missing characteristics for weather formations 106. In some examples, wherein the second set of information is insufficient for computing system 202 to determine the missing characteristics, computing system 202 may request and/or receive additional sets of information from other sources external to ownship vehicle 102 (e.g., other vehicles, ground-based sources) and determine the missing characteristics based on a combination of the first, second, and additional sets of information. Computing system 202 may then generate the weather map including weather formation(s) 106 (408).

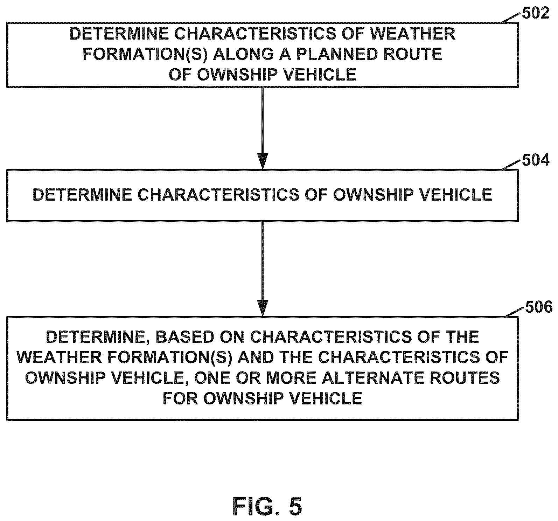

FIG. 5 is a flow chart illustrating an example technique for determining alternate routes 110 for ownship vehicle 102 based on the characteristics of weather formation(s) 106 and of ownship vehicle 102 by an example system (e.g., computing system 202) of ownship vehicle 102 of FIGS. 1-2. While the technique illustrated in FIG. 5 is described primarily with respect to ownship vehicle 102 illustrated in FIGS. 1-2, the technique may be performed by any other ownship vehicle described herein. While FIG. 5 illustrates steps of the techniques in one particular order, the steps of the techniques may be performed in other orders.

Computing system 202 may determine characteristics of weather formation(s) 106 along planned route 108 of ownship vehicle (502). Computing system 202 may determine the characteristics of weather formation(s) 106 in accordance with one or more example techniques previously described herein.

Computing system 202 may determine characteristics of ownship vehicle 102 (504). The characteristics of ownship vehicle 102 may be stored in memory 212 of computing system 202, e.g., in ownship characteristics module 216 of memory 212. Computing system 202 may determine the characteristics of ownship vehicle 102 by retrieving the stored characteristics from within memory 212.

Computing system 202 may determine, based on characteristics of weather formation(s) 106 and the characteristics of ownship vehicle 102, one or more alternate routes 110 for ownship vehicle 102 (506). Computing system 202 may determine, based on the characteristics of ownship vehicle 102, which types of weather formations ownship vehicle 102 may travel through (e.g., types of passable weather formations). Computing system 202 compare types of weather formations 106 against the types of passable weather formations for ownship vehicle 102 to determine whether each of weather formations 106 is passable or impassable. Computing system 202 may determine alternate routes 110 to avoid impassable weather formations 106. Computing system 202 may determine alternate routes 110 to extend through at least some of passable weather formations 106. Computing system 202 may narrow down a plurality of all possible alternate routes 110 to a threshold number of alternate routes 110. Computing system 202 may output the alternate routes 110 via UI 210 of computing system 202.

In one or more examples, the functions described above may be implemented in hardware, software, firmware, or any combination thereof. For example, weather detection module 214, ownship characteristics module 216, weather avoidance module 218, and received sensor data module 220 may be implemented, in whole or in part, as instructions executing on processing circuitry 208. If implemented in software, the functions may be stored on or transmitted over, as one or more instructions or code, a computer-readable medium and executed by a hardware-based processing unit. Computer-readable media, e.g., memory 222 of FIG. 2, may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The techniques of this disclosure may also be described in the following examples.

Example 1: an aircraft avionics system of an ownship vehicle, the aircraft avionics system comprising: communications circuitry; a user interface (UI); and processing circuitry configured to: receive a first set of information indicating one or more first characteristics of a weather formation along a planned route of the ownship vehicle; receive, via the communications circuitry, a second set of information from one or more other vehicles, wherein the second set of information indicate one or more second characteristics of the weather formation, the one or more second characteristics being different from the one or more first characteristics; determine, based on the one or more first characteristics of the weather formation, the one or more second characteristics of the weather formation, and one or more characteristics of the ownship vehicle, an alternate route; and present, via the UI, the alternate route to an operator of the ownship vehicle.

Example 2: the aircraft avionics system of example 1, wherein to receive the second set of information from the one or more other vehicles, the processing circuitry is configured to: determine, based on the first set of information, an absence of the one or more second characteristics of the weather formation, and based on a determination of the absence of the one or more second characteristics, transmit, via the communications circuitry, a request for the second set of information to the one or more other vehicles.

Example 3: the aircraft avionics system of any of examples 1 or 2, wherein each vehicle of the one or more other vehicles is within a threshold range of the weather formation.

Example 4: the aircraft avionics system of any of examples 1-3, wherein each characteristic of the one or more first characteristics and the one or more second characteristics comprises one of: a position of the weather formation; a size of the weather formation; a type of the weather formation; a path of travel of the weather formation; a travel speed of the weather formation; or an altitude of the weather formation.

Example 5: the aircraft avionics system of any of examples 1-4, wherein the processing circuitry is configured to receive the second set of information directly from the one or more other vehicles.

Example 6: the aircraft avionics system of any of examples 1-5, wherein the one or more characteristics of the ownship vehicle comprises one or more of: a size of the ownship vehicle; a wingspan of the ownship vehicle; a type of the ownship vehicle; a type of one or more engines of the ownship vehicle; a presence of an anti-icing system in the ownship vehicle; or an indication of one or more certifications of the ownship vehicle for a specific weather condition.

Example 7: the aircraft avionics system of any of examples 1-6, wherein the processing circuitry is configured to determine the alternate routes independent of a path of travel of each vehicle of the one or more other vehicles.

Example 8: the aircraft avionics system of any of examples 1-7, wherein to determine the alternate route, the processing circuitry is configured to: determine, based on the one or more first characteristics, the one or more second characteristics, and the one or more characteristics of the ownship vehicle, a plurality of alternate routes for the ownship vehicle; and select the alternate route from the plurality of alternate routes based on one or more of: a number of maneuvers for each alternate route of the plurality of alternate routes, a magnitude of each maneuver of the number of maneuvers, or an amount of fuel expenditure for each alternate route of the plurality of alternate routes.

Example 9: the aircraft avionics system of example 8, wherein the weather formation comprise a plurality of weather formations, and wherein to determine the plurality of alternate routes for the ownship vehicle, the processing circuitry is configured to: determine, based on the one or more first characteristics and the one or more second characteristics, a type of each weather formation of the plurality of weather formations; determine, based on the one or more characteristics of the ownship vehicle and the type of each weather formation of the plurality of weather formations, a plurality of passable weather formations of the plurality of weather formations that the ownship vehicle is configured to pass through and a plurality of impassable weather formations of the plurality of weather formations that the ownship vehicle is not configured to pass through; and determine each route of the plurality of alternate routes to avoid each impassable weather formation of the plurality of impassable weather formations.

Example 10: the aircraft avionics system of example 9, wherein at least one alternate route of the plurality of alternate routes extends through at least one passable weather formation of the plurality of passable weather formations.

Example 11: a method comprising: receiving, by processing circuitry of an ownship vehicle, a first set of information indicating one or more first characteristics of a weather formation along a planned route of the ownship vehicle; receiving, by the processing circuitry and via communications circuitry of the ownship vehicle, a second set of information from one or more other vehicles, wherein the second set of information indicates one or more second characteristics of the weather formation, the one or more second characteristics being different from the one or more first characteristics; determining, by the processing circuitry and based on the one or more first characteristics, the one or more second characteristics, and one or more characteristics of the ownship vehicle, an alternate route; and presenting, by the processing circuitry and via a user interface (UI) of the ownship vehicle, the alternate route to an operator of the ownship vehicle.

Example 12: the method of example 11, wherein the weather formation defines characteristics comprising the one or more first characteristics and the one or more second characteristics, and wherein receiving the second set of information from the one or more other vehicles comprises: determining, by the processing circuitry and based on the first set of information, an absence of the one or more second characteristics of the weather formation; and based on a determination of the absence of the one or more second characteristics, transmitting, by the processing circuitry and via the communications circuitry, a request for the second set of information to the one or more other vehicles.

Example 13: the method of any of examples 11 or 12, wherein each of the one or more first characteristics and the one or more second characteristics comprises one of: a position of the weather formation; a size of the weather formation; a type of the weather formation; a path of travel of the weather formation; a travel speed of the weather formation; or an altitude of the weather formation.

Example 14: the method of any of examples 11-13, wherein the one or more characteristics of the ownship vehicle comprises one or more of: a size of the ownship vehicle; a wingspan of the ownship vehicle; a type of the ownship vehicle; a type of one or more engines of the ownship vehicle; a presence of an anti-icing system in the ownship vehicle; or an indication of one or more certifications of the ownship vehicle for a weather condition.

Example 15: the method of any of examples 11-14, wherein determining the alternate route comprises: determining, by the processing circuitry and based on the one or more first characteristics, the one or more second characteristics, and the one or more characteristics of the ownship vehicle, a plurality of alternate routes for the ownship vehicle; and selecting, by the processing circuitry, the alternate route from the plurality of alternate routes based on one or more of: a number of maneuvers for each alternate route of the plurality of alternate routes, a magnitude of each maneuver of the number of maneuvers, or an amount of fuel expenditure for each alternate route of the plurality of alternate routes.

Example 16: the method of example 15, wherein the weather formation comprises a plurality of weather formations, and wherein determining the plurality of alternate routes for the ownship vehicle comprises: determining, by the processing circuitry and based on the one or more first characteristics, the one or more second characteristics, and the one or more characteristics of the ownship vehicle, a plurality of passable weather formations of the plurality of weather formations that the ownship vehicle is configured to pass through and a plurality of impassable weather formations of the plurality of weather formations that the ownship vehicle is not configured to pass through; and determining, by the processing circuitry, each route of the plurality of alternate routes to avoid each impassable weather formation of the plurality of impassable weather formations.

Example 17: a computer-readable medium comprising instructions that, when executed by processing circuitry of an ownship vehicle, causes the processing circuitry to: receive a first set of information indicating one or more first characteristics of a weather formation along a planned route of the ownship vehicle; receive, via communications circuitry of the ownship vehicle, a second set of information from one or more other vehicles indicating one or more second characteristics of the weather formation, the one or more second characteristics being different from the one or more first characteristics; determine, based on the one or more first characteristics, the one or more second characteristics, and one or more characteristics of the ownship vehicle, an alternate route; and present, via a user interface (UI) of the ownship vehicle, the alternate route to an operator of the ownship vehicle.

Example 18: the computer-readable medium of example 17, wherein to cause the processing circuitry to receive the second set of information from the one or more other vehicles, the instructions cause the processing circuitry to: determine, based on the first set of information, an absence of the one or more second characteristics of the weather formation, and based on a determination of the absence of the one or more second characteristics, transmit, via the communications circuitry, a request for the second set of information to the one or more other vehicles.

Example 19: the computer-readable medium of any of examples 17 or 18, wherein to cause the processing circuitry to determine the alternate route, the instructions cause the processing circuitry to: determine, based on the one or more first characteristics, the one or more second characteristics, and the one or more characteristics of the ownship vehicle, a plurality of alternate routes for the ownship vehicle; and select the alternate route from the plurality of alternate routes based on one or more of: a number of maneuvers for each alternate route of the plurality of alternate routes, a magnitude of each maneuver of the number of maneuvers, or an amount of fuel expenditure for each alternate route of the plurality of alternate routes.

Example 20: the computer-readable medium of example 19, wherein the weather formation comprises a plurality of weather formations, and wherein to cause the processing circuitry to determine the plurality of alternate routes for the ownship vehicle, the instructions cause the processing circuitry to: determine, based on the one or more first characteristics, the one or more second characteristics, and the one or more characteristics of the ownship vehicle, a plurality of passable weather formations of the plurality of weather formations that the ownship vehicle is configured to pass through and a plurality of impassable weather formations of the plurality of weather formations that the ownship vehicle is not configured to pass through; and determine each route of the plurality of alternate routes to avoid each impassable weather formation of the plurality of impassable weather formations.

Various examples of the disclosure have been described. These and other examples are within the scope of the following claims.

## Claims

1. An aircraft avionics system of an ownship vehicle, the aircraft avionics system comprising:
communications circuitry;
a user interface (UI); and
processing circuitry configured to:
receive a first set of information indicating one or more first characteristics of a weather formation along a planned route of the ownship vehicle;
receive, via the communications circuitry, a second set of information from one or more other vehicles, wherein the second set of information indicate one or more second characteristics of the weather formation, the one or more second characteristics being different from the one or more first characteristics;
determine, based on the one or more first characteristics of the weather formation, the one or more second characteristics of the weather formation, and one or more characteristics of the ownship vehicle, an alternate route; and
present, via the UI, the alternate route to an operator of the ownship vehicle.

2. The aircraft avionics system of claim 1,
wherein to receive the second set of information from the one or more other vehicles, the processing circuitry is configured to:
determine, based on the first set of information, an absence of the one or more second characteristics of the weather formation, and
based on a determination of the absence of the one or more second characteristics, transmit, via the communications circuitry, a request for the second set of information to the one or more other vehicles.

3. The aircraft avionics system of any of claims 1 and 2, wherein each vehicle of the one or more other vehicles is within a threshold range of the weather formation.

4. The aircraft avionics system of any of claims 1-3, wherein each characteristic of the one or more first characteristics and the one or more second characteristics comprises one of:
a position of the weather formation;
a size of the weather formation;
a type of the weather formation;
a path of travel of the weather formation;
a travel speed of the weather formation; or
an altitude of the weather formation.

5. The aircraft avionics system of any of claims 1-4, wherein the processing circuitry is configured to receive the second set of information directly from the one or more other vehicles.

6. The aircraft avionics system of any of claims 1-5, wherein the one or more characteristics of the ownship vehicle comprises one or more of:
a size of the ownship vehicle;
a wingspan of the ownship vehicle;
a type of the ownship vehicle;
a type of one or more engines of the ownship vehicle;
a presence of an anti-icing system in the ownship vehicle; or
an indication of one or more certifications of the ownship vehicle for a specific weather condition.

7. The aircraft avionics system of any of claims 1-6, wherein the processing circuitry is configured to determine the alternate routes independent of a path of travel of each vehicle of the one or more other vehicles.

8. The aircraft avionics system of any of claims 1-7, wherein to determine the alternate route, the processing circuitry is configured to:
determine, based on the one or more first characteristics, the one or more second characteristics, and the one or more characteristics of the ownship vehicle, a plurality of alternate routes for the ownship vehicle; and
select the alternate route from the plurality of alternate routes based on one or more of:
a number of maneuvers for each alternate route of the plurality of alternate routes,
a magnitude of each maneuver of the number of maneuvers, or
an amount of fuel expenditure for each alternate route of the plurality of alternate routes.

9. The aircraft avionics system of claim 8, wherein the weather formation comprise a plurality of weather formations, and wherein to determine the plurality of alternate routes for the ownship vehicle, the processing circuitry is configured to:
determine, based on the one or more first characteristics and the one or more second characteristics, a type of each weather formation of the plurality of weather formations;
determine, based on the one or more characteristics of the ownship vehicle and the type of each weather formation of the plurality of weather formations, a plurality of passable weather formations of the plurality of weather formations that the ownship vehicle is configured to pass through and a plurality of impassable weather formations of the plurality of weather formations that the ownship vehicle is not configured to pass through; and
determine each route of the plurality of alternate routes to avoid each impassable weather formation of the plurality of impassable weather formations.

10. The aircraft avionics system of claim 9, wherein at least one alternate route of the plurality of alternate routes extends through at least one passable weather formation of the plurality of passable weather formations.

11. A method comprising:
receiving, by processing circuitry of an ownship vehicle, a first set of information indicating one or more first characteristics of a weather formation along a planned route of the ownship vehicle;
receiving, by the processing circuitry and via communications circuitry of the ownship vehicle, a second set of information from one or more other vehicles, wherein the second set of information indicates one or more second characteristics of the weather formation, the one or more second characteristics being different from the one or more first characteristics;
determining, by the processing circuitry and based on the one or more first characteristics, the one or more second characteristics, and one or more characteristics of the ownship vehicle, an alternate route; and
presenting, by the processing circuitry and via a user interface (UI) of the ownship vehicle, the alternate route to an operator of the ownship vehicle.

12. The method of claim 11,
wherein the weather formation defines characteristics comprising the one or more first characteristics and the one or more second characteristics, and
wherein receiving the second set of information from the one or more other vehicles comprises:
determining, by the processing circuitry and based on the first set of information, an absence of the one or more second characteristics of the weather formation; and
based on a determination of the absence of the one or more second characteristics, transmitting, by the processing circuitry and via the communications circuitry, a request for the second set of information to the one or more other vehicles.

13. The method of any of claims 11 and 12, wherein each of the one or more first characteristics and the one or more second characteristics comprises one of:
a position of the weather formation;
a size of the weather formation;
a type of the weather formation;
a path of travel of the weather formation;
a travel speed of the weather formation; or
an altitude of the weather formation.

14. The method of any of claims 11-13, wherein the one or more characteristics of the ownship vehicle comprises one or more of:
a size of the ownship vehicle;
a wingspan of the ownship vehicle;
a type of the ownship vehicle;
a type of one or more engines of the ownship vehicle;
a presence of an anti-icing system in the ownship vehicle; or
an indication of one or more certifications of the ownship vehicle for a weather condition.

15. The method of any of claims 11-14, wherein determining the alternate route comprises:
determining, by the processing circuitry and based on the one or more first characteristics, the one or more second characteristics, and the one or more characteristics of the ownship vehicle, a plurality of alternate routes for the ownship vehicle; and
selecting, by the processing circuitry, the alternate route from the plurality of alternate routes based on one or more of:
a number of maneuvers for each alternate route of the plurality of alternate routes,
a magnitude of each maneuver of the number of maneuvers, or
an amount of fuel expenditure for each alternate route of the plurality of alternate routes.
